# EUROPEAN PATENT SPECIFICATION

(11) **EP 4 650 253 B1**
(45) Date of publication and mention of the grant of the patent: **21.10.2026**
(21) Application number: 25205216.2
(22) Date of filing: 04.11.2021
(51) Int. Cl.: B62D 25/20, B62D 29/00

(54) **REAR UNDERFLOOR STRUCTURE FOR A MOTOR VEHICLE**
UNTERBODEN-HECKSTRUKTUR FÜR EIN KRAFTFAHRZEUG
STRUCTURE DE PLANCHER ARRIÈRE POUR VÉHICULE AUTOMOBILE

(30) Priority: 06.11.2020 WO PCT/IB2020/060465
(43) Date of publication of application: 19.11.2025
(60) Divisional application: 26204228.6
(62) Document number(s) of the earlier application(s) in accordance with Art. 76 EPC: 21802825.6 / 4 240 638
(73) Proprietor: ArcelorMittal, 1160 Luxembourg (LU)
(72) Inventor: HASENPOUTH, Dan, 75017 Paris (FR); MORIAU, Olivier, 60761 Montataire (FR)
(74) Representative: Lavoix

(56) References cited:
- EP-A1- 2 832 887
- EP-A1- 3 006 131
- WO-A1-2017/098306
- DE-A1- 102015 106 812
- DE-A1- 19 946 013
- DE-B3- 102017 110 864

## Description

The present invention relates to a rear underfloor structure for a motor vehicle.

Car makers are submitted to the ever more demanding requirements of increasing the passive safety of vehicles, lowering the weight of the vehicle to minimize greenhouse gas emissions in case of internal combustion engines or increase the vehicle's driving range in case of electric vehicles, while keeping production costs low and productivity rates high.

The rear underfloor structure of a motor vehicle is a key structural element of the vehicle and contributes to the safety of the occupants in case of a rear crash. It protects the gas tank, often located below the passenger seats, in case of a combustion engine. It protects the rear electric engine in case of an electric or hybrid vehicle.

The rear underfloor structure, consisting of numerous individual parts, makes up a significant mass of the vehicle's body. It also involves costly manufacturing processes: multiple forming operations and assembly steps to obtain the finished structure. Such a structure is exemplified in WO2017/098306A1, which discloses the features of the preamble of claim 1.

The object of the present invention is to address the combined challenges of safety, weight reduction and high productivity by providing a rear underfloor structure having a reduced number of parts, an excellent safety performance and an optimized total weight.

To this end the present invention relates to:
- a rear underfloor structure for a motor vehicle comprising a first and a second side member and at least one cross member linking said first and second side members, wherein each side member comprises a horizontal, an inner wall, at least one cross-member attachment zone, corresponding to the portion of the side member on to which the corresponding cross-member is attached, and wherein said inner walls do not have the same height in the cross-member attachment zone and outside said cross-member attachment zone, and wherein said rear underfloor structure is made by stamping a single tailor welded blank comprising at least two sub-blanks.

According to other optional features of the rear underfloor structure according to the invention, considered alone or according to any possible technical combination, as long as these combinations are supported by the appended claims:
- the rear underfloor structure is made by hot stamping.
- the rear underfloor structure comprises at least two cross members
- the horizontal wall and the inner wall of each side member are linked by an inner radius, wherein said inner radius extends along at least part of the cross-member attachment zone.
- the tailor welded blank used to manufacture the rear underfloor structure comprises at least one sub-blank which is coated with an aluminum based metallic coating.
- the tailor welded blank used to manufacture the rear underfloor structure comprises at least one sub-blank which is coated with an aluminum based metallic coating, comprising from 2.0 to 24.0% by weight of zinc, from 1.1 to 12.0% by weight of silicon, optionally from 0 to 8.0% by weight of magnesium, and optionally additional elements chosen from Pb, Ni, Zr, or Hf, the content by weight of each additional element being inferior to 0.3% by weight, the balance being aluminum and optionally unavoidable impurities.
- the tailor welded blank used to manufacture the rear underfloor structure comprises at least one sub-blank which comprises an emissivity increasing top layer on at least one side.
- the tailor welded blank used to manufacture the rear underfloor structure comprises at least one sub-blank which comprises at least one sub-blank which is made of a press-hardening steel having an ultimate tensile strength after hot stamping above 1800MPa.
- the tailor welded blank used to manufacture the rear underfloor structure comprises at least one sub-blank which comprises at least one sub-blank which is made of a press-hardening steel having a yield strength after hot forming comprised between 700 and 950MPa, an ultimate tensile strength after hot forming comprised between 950MPa and 1200MPa and a bending angle after hot forming above 75°.
- the tailor welded blank used to manufacture the rear underfloor structure comprises at least one sub-blank which comprises at least one metallic patch.
- the tailor welded blank used to manufacture the rear underfloor structure comprises at least one sub-blank which comprises at least one metallic patch comprising an emissivity increasing top layer.
- the tailor welded blank used to manufacture the rear underfloor structure comprises at least one sub-blank which comprises at least one weld seam reinforcing patch, wherein said weld seam reinforcing patch is applied on an area which comprises a weld seam.
- the tailor welded blank used to manufacture the rear underfloor structure comprises at least one sub-blank which comprises at least one weld seam reinforcing patch, which itself comprises an emissivity increasing top layer.
- the thickness of the interdiffusion layer in the Aluminum based metallic coated areas of the rear underfloor structure is comprised between 3 microns and 15 microns.
- the thickness of the interdiffusion layer in the Aluminum based metallic coated areas of the rear underfloor structure is comprised between 3 microns and 10 microns.

The present invention further relates to a motor vehicle comprising the above described rear underfloor structure.

Other aspects and advantages of the invention will appear upon reading the following description, given by way of example, and made in reference to the appended drawings, wherein:
- Figure 1 is an overall perspective view of a vehicle according to the invention
- Figure 2 is a perspective view of the underfloor rear structure according to the known state of the art in its assembled form (top) and in an exploded view (bottom)
- Figure 3 is a top view of an embodiment of the underfloor rear structure according to the invention
- Figure 4 is a top view of an embodiment of the underfloor rear structure according to the invention
- Figure 5 is a perspective view of an embodiment of the underfloor rear structure according to the invention
- Figure 6 is a perspective view of an embodiment of the underfloor rear structure according to the invention as seen from the A-A cross-section indicated in figure 3
- Figure 7 is a zoomed perspective view of an embodiment of the underfloor rear structure according to the invention in the box-area labelled B in figure 3
- Figure 8 is a top view of a tailor welded blank used to manufacture the underfloor rear structure according to the invention.

In the following description, the terms "upper", "lower", "front", "rear", "transverse" and "longitudinal" are defined according to the usual directions of a mounted vehicle. More particularly, the terms "upper", "lower", "up", "down", "bottom" and "top" are defined according to the elevation direction of the vehicle, the terms "front", "rear", "forward", "backward" and "longitudinal" are defined according to the front / rear direction of the vehicle and the term "transverse" is defined according to the width of the vehicle. The terms "inner", "outer" are defined according to the inside and outside of the vehicle - an "inner" part, portion, zone etc. will be closer to the inside of the vehicle than the corresponding "outer" part, portion, zone etc. The term "height" refers to the distance between two points, lines, surfaces or volumes as measured in the horizontal direction.

For better understanding, on all the figures representing the underfloor rear structure, the rear and front direction of the vehicle have been indicated using arrows respectively labeled "R" and "F".

A blank of steel refers to a flat sheet of steel, which has been cut to any shape suitable for its use. A blank has a top and bottom face, which are also referred to as a top and bottom side or as a top and bottom surface. The distance between said faces is designated as the thickness of the blank. The thickness can be measured for example using a micrometer, the spindle and anvil of which are placed on the top and bottom faces. In a similar way, the thickness can also be measured on a formed part.

Tailor welded blanks are made by assembling together, for example by laser welding together, several blanks of steel, known as sub-blanks, in order to optimize the performance of the part in its different areas, to reduce overall part weight and to reduce overall part cost. The sub-blanks forming the tailor welded blanks can be assembled with or without overlap, for example they can be laser butt-welded (no overlap), or they can be spot-welded to one another (with overlap).

Hot stamping is a forming technology which involves heating a blank up to a temperature at which the microstructure of the steel has at least partially transformed to austenite, forming the blank at high temperature by stamping it and quenching the formed part to obtain a microstructure having a very high strength. Hot stamping allows to obtain very high strength parts with complex shapes and no springback. In order to yield the described benefits of hot stamping, the material used is known as press-hardening material, which has a chemical composition allowing it to form the desired hardened microstructure when submitted to the above described hot stamping process. It should be understood that the thermal treatment to which a part is submitted includes not only the above described thermal cycle of the hot stamping process itself, but also a subsequent paint baking step, performed after the part has been painted in order to bake the paint. The mechanical properties of hot stamped parts below are those measured after the paint baking step, in case a paint baking step has indeed been performed.

The yield strength, the ultimate tensile strength and the uniform and total elongation are measured according to ISO standard ISO 6892-1, published in October 2009.

The bending angle is measured according to the VDA-238 bending standard. For a same material, the bending angle depends on the thickness. For the sake of simplicity, the bending angle values of the current invention refer to a thickness of 1.5mm. If the thickness is different than 1.5mm, the bending angle value needs to be adjusted by the following calculation where α_{1,5} is the bending angle at 1,5mm, t is the thickness, and αₜ is the bending angle for thickness t: ${α}_{t} = \frac{{α}_{1.5} \times \sqrt{1.5}}{\sqrt{t}}$

The bending angle of a part is a way to measure the ability of the part to resist deformation without the formation of cracks.

Emissivity is the relative power of a surface to emit heat by radiation. It represents the ratio of the radiant energy emitted by a surface to that emitted by a blackbody at the same temperature, and is a value comprised between 0 and 1. The higher the emissivity of the surface of a blank, the more it will absorb heat by radiation and therefore the easier it will be to heat it using a radiant furnace.

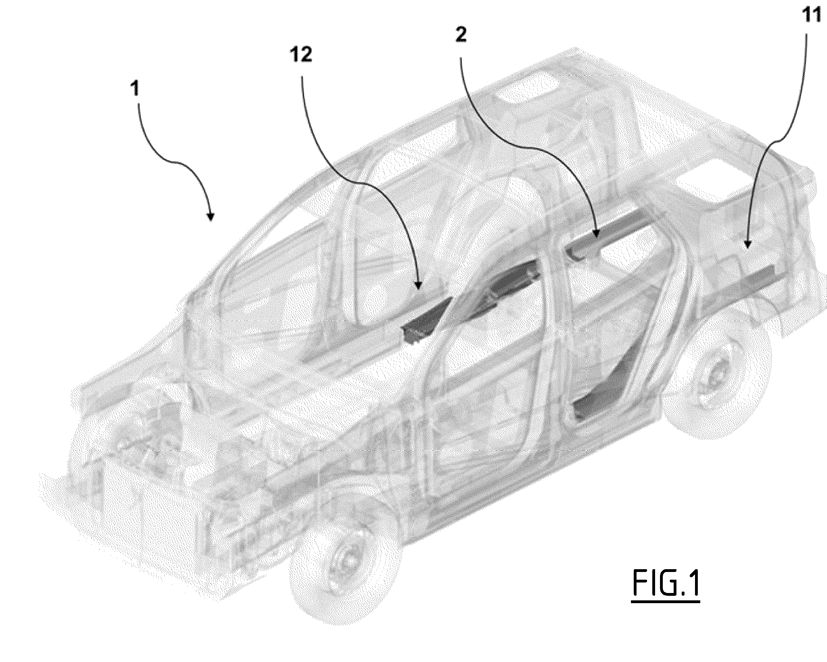

Referring to figure 1, a rear underfloor structure 2 for a motor vehicle 1 is described. The motor vehicle 1 can be any type of passenger vehicle comprising at least a front and a rear set of doors: compact, sedan, Sport Utility Vehicle etc. The described rear underfloor structure is essentially the same whatever the category of vehicle. Furthermore, the powertrain of said motor vehicle can be a combustion engine, electrical motors, fuel cells or any type of hybrid system.

The rear underfloor structure 2 extends longitudinally from the rear of the vehicle up to below the floor panel of the passenger cabin. It comprises at least a first and second side member 4, located on either side of the vehicle and at least one cross member 5 linking transversally said first and second side members 4.

The following is a general description of a typical side member 4, it should be understood that the below description of a side member 4 is not limitative of the scope of the current invention, which can be applied to any type of design of side member 4, as long as it falls under the scope of the appended claims:
- it comprises a rear portion extending substantially in the longitudinal direction at the same elevation as the rear bumper assembly 11 and attached at its rear end to said rear bumper assembly 11,
- a front portion extending substantially in the longitudinal direction at a lower elevation than the rear portion and attached to the vehicle lateral reinforcement structure 12,
- a transition zone comprising at least an upper and a lower bend linking said front and rear portions. The presence of said upper and lower bends allows for the difference in elevation level of the front and lower portions.

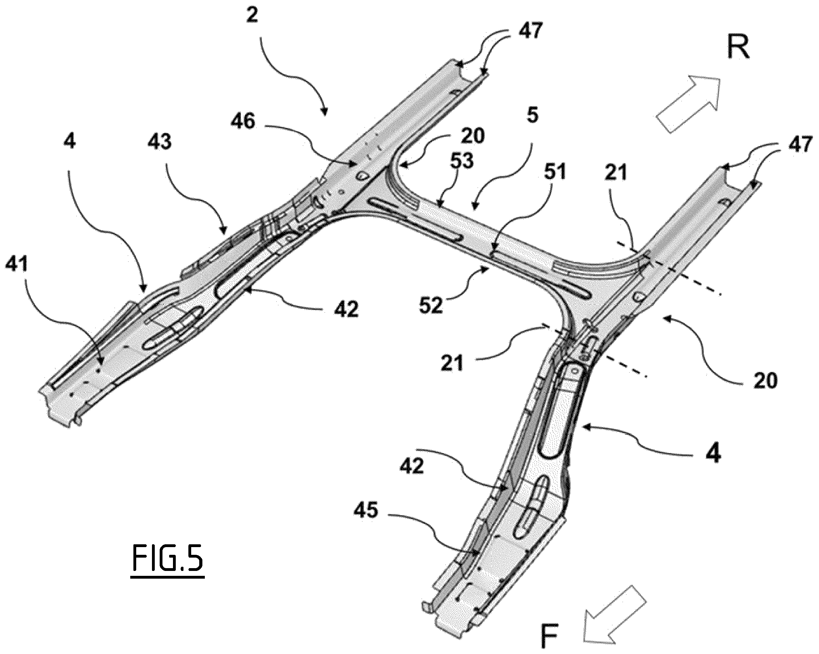

Referring to figure 5, the side members 4 have a general U-shape, comprising a horizontal wall 41, which extends in a substantially horizontal plane and an inner and outer wall 42, 43 extending in substantially vertical planes. Said inner and outer walls 42, 43 are linked to said horizontal wall 41 respectively by an inner and an outer radius 45, 46. By "radius", it is meant a portion of the part which is generally curved and allows for the transition between different planar orientations in a part. In the present case the inner radius 45 allows for the transition between the substantially horizontal orientation of the horizontal wall 41 and the substantially vertical orientation of the inner wall 42. Similarly, the outer radius 46 allows for the transition between the substantially horizontal orientation of the horizontal wall 41 and the substantially vertical orientation of the outer wall 43.

In a specific embodiment, the side members 4 also comprise flanges 47 extending along the top of the inner and outer walls 42, 43 in substantially vertical planes. Advantageously, said flanges allow to assemble the side members 4 with the rest of the vehicle structure, for example by spot welding or laser welding along said flanges 47.

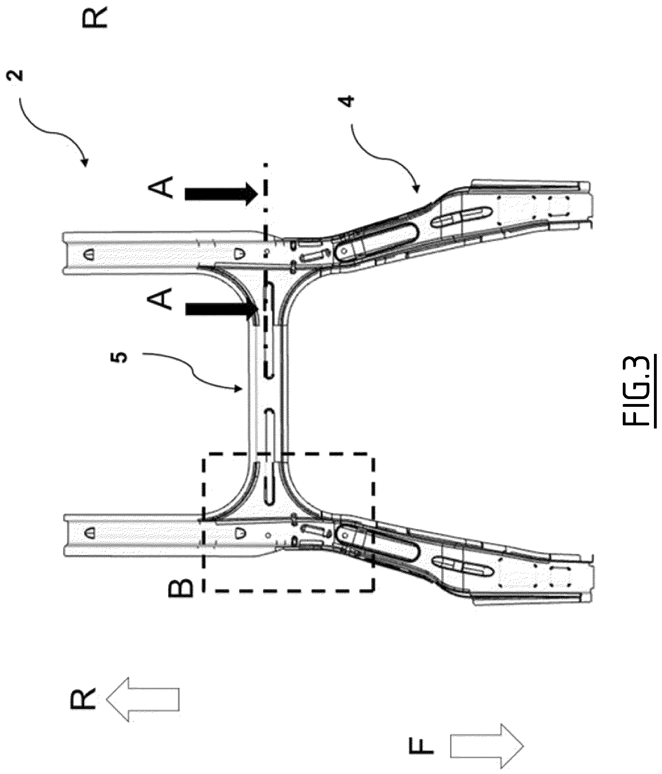

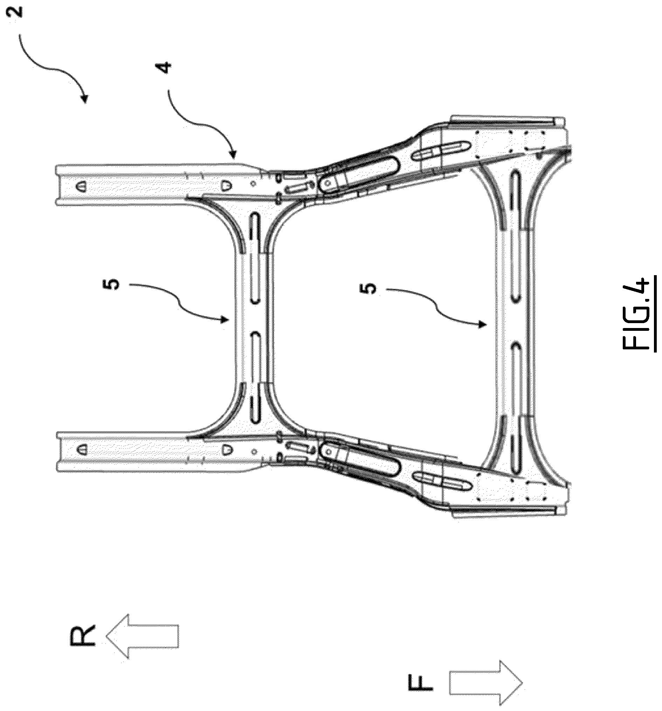

The rear underfloor structure 2 further comprises at least one cross member 5 linking said first and second side members 4. Said cross member 5 extends along a generally transverse direction. As with the side members 4, the cross member 5 comprises a horizontal wall 51, which extends in a substantially horizontal plane and a front and rear wall 52, 53 extending in substantially vertical planes. Referring to figure 3, the rear underfloor structure 2 can have one cross-member 5. Referring to figure 4, the rear underfloor structure 2 can have two cross-members 5. And other embodiments according to the invention in which the rear underfloor structure 2 comprises more than 2 cross-members are also possible.

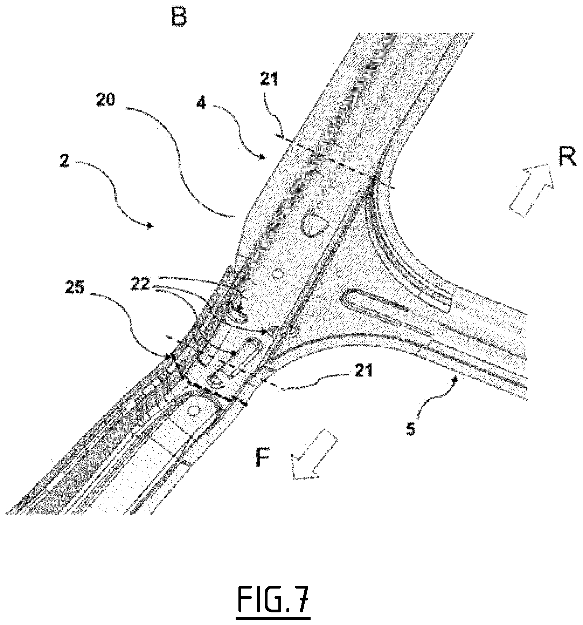

Referring to figures 5 and 7, the side members 4 of the current invention each comprise at least one cross-member attachment zone 20, corresponding to the portion of the side member 4 on to which the corresponding cross-member 5 is attached. The cross-member attachment zone 20 is delimited by the dashed lines 21 on figures 5 and 7. It will be easily understood that there are as many cross-member attachment zones 20 per side member 4 as there are cross-members 5.

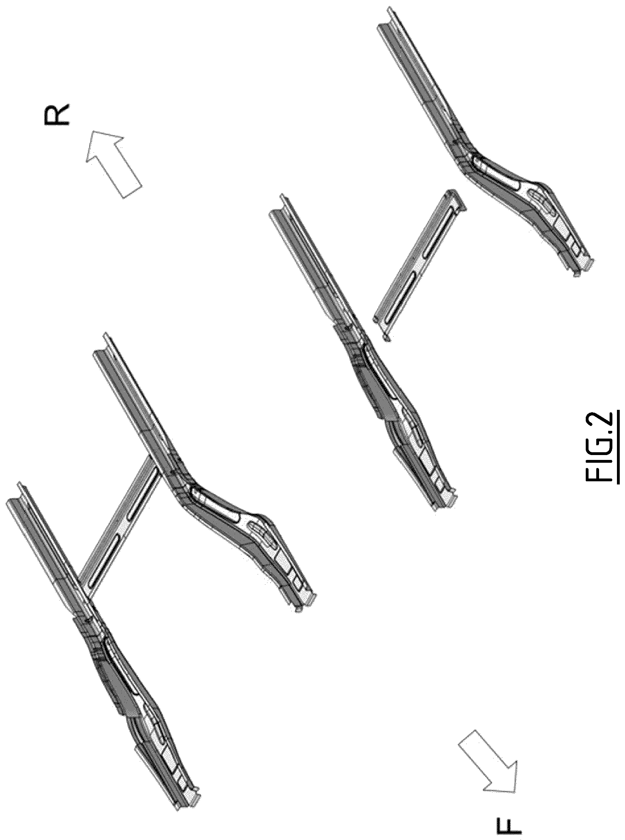

The rear underfloor structure of the state of the art depicted in figure 2 is made of several distinct parts which are assembled together after having formed them. In the example of the state of the art depicted in figure 2, showing a case of a structure having only one cross member, there are 3 distinct parts.

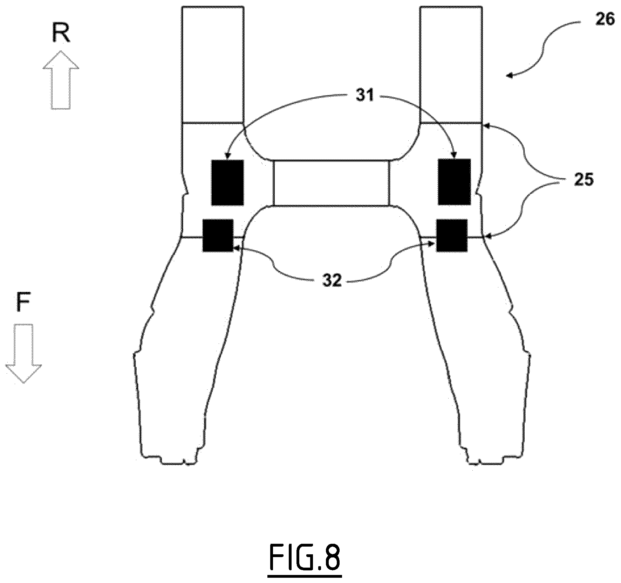

Contrary to the state of the art such as for example disclosed in WO2017/098306A1, the rear underfloor structure 2 of the current invention is made by stamping a single tailor welded blank comprising at least two sub-blanks. This allows to optimize the performance of the part in its different areas, to reduce overall part weight and to reduce overall part cost and manufacturing complexity. An example of a tailor welded blank 26 used to manufacture the rear underfloor structure 2 according to the invention is given on figure 8. The weld seams 25 are materialized by lines on figure 8. This is one example of tailor welded blank configuration. The choice of the position of the weld seams and of the distribution of grades and thicknesses will be dictated by the specific requirements of the vehicle that the part is being integrated to. For example, the rear part of the side members 4 will be made of a material which can absorb crash energy by deforming, while the front part of said side members 4 will be made of anti-intrusion material, which will not deform during the crash in order to protect the passengers sitting at the back of the vehicle.

Among other features, the fact that the part is stamped from one single tailor welded blank means that it is necessary to adapt the shape of the inner walls 42 in the at least one cross-member attachment zone 20: the inner walls 42 do not have the same height in the cross-member attachment zone 20 and outside said cross-member attachment zone 20.

In a particular embodiment, the rear underfloor structure 2 is made by hot stamping. Advantageously, this allows to reach very high mechanical strength while having a complex part shape and also very good geometrical tolerances on the finished part thanks to the absence of springback. This last point is particularly significative in the case of the rear underfloor structure 2 which is a large part and would be subject to high geometrical inaccuracies and overall shape defects such as twisting or warping, should a significant amount of springback occur.

In a particular embodiment, at least one sub-blank of the blank 26 used to manufacture the rear underfloor structure 2 is made of a material such that the yield strength of the corresponding area of the rear underfloor structure 2 after press-hardening is comprised between 700 and 950MPa, the tensile strength between 950MPa and 1200MPa and the bending angle is above 75°.

In a particular embodiment, at least one sub-blank of the blank 26 used to manufacture the rear underfloor structure 2 has a composition comprising in % weight: 0.06% ≤ C ≤ 0.1%, 1% ≤ Mn ≤ 2%, Si ≤ 0.5%, Al ≤0.1%, 0.02% ≤ Cr ≤ 0.1%, 0.02% ≤ Nb ≤ 0.1%, 0.0003% ≤ B ≤ 0.01%, N ≤ 0.01%, S ≤ 0.003%, P ≤ 0.020% less than 0,1% of Cu, Ni and Mo, the remainder being iron and unavoidable impurities resulting from the elaboration. With this composition range, the yield strength of the corresponding area of the rear underfloor structure 2 after press-hardening is comprised between 700 and 950MPa, the tensile strength between 950MPa and 1200MPa and the bending angle is above 75°. For example, this sub-blank is made of Ductibor^{®} 1000.

In a particular embodiment, at least one sub-blank of the blank 26 used to manufacture the rear underfloor structure 2 has an ultimate tensile strength in the area corresponding to said sub-blank after press-hardening which is comprised between 1300MPa and 1650MPa and a yield strength which is comprised between 950MPa and 1250MPa.

In a particular embodiment, at least one sub-blank of the blank 26 used to manufacture the rear underfloor structure 2 has an ultimate tensile strength in the area corresponding to said sub-blank after press-hardening which is comprised between 1300MPa and 1650MPa, a yield strength which is comprised between 950MPa and 1250MPa and a bending angle which is above 75°.

In a particular embodiment, at least one sub-blank of the blank 26 used to manufacture the rear underfloor structure 2 comprises for example, in % weight: 0.20% ≤ C ≤ 0.25%, 1.1% ≤ Mn ≤ 1.4%, 0.15% ≤ Si ≤ 0.35%, ≤ Cr ≤ 0.30%, 0.020% ≤ Ti ≤ 0.060%, 0.020% ≤ Al ≤ 0.060%, S ≤ 0.005%, P ≤ 0.025%, 0.002% ≤ B ≤ 0.004%, the remainder being iron and unavoidable impurities resulting from the elaboration. With this composition range, the ultimate tensile strength of the part in the area corresponding to said sub-blank after press-hardening is comprised between 1300MPa and 1650MPa and the yield strength is comprised between 950MPa and 1250MPa. For example, said sub-blank is made of Usibor^{®} 1500.

In a particular embodiment, at least one sub-blank of the blank 26 used to manufacture the rear underfloor structure 2 is made of a material such that the tensile strength of the corresponding area of the rear underfloor structure 2 after press-hardening is higher than 1800 MPa.

In a particular embodiment, at least one sub-blank of the blank 26 used to manufacture the rear underfloor structure 2 comprises in % weight: 0.24% ≤ C ≤ 0.38%, 0.40% ≤ Mn ≤ 3%, 0.10% ≤ Si ≤ 0.70%, 0.015% ≤ Al ≤ 0.070%, Cr ≤ 2%, 0.25% ≤ Ni ≤ 2%, 0.015% ≤ Ti ≤ 0.10%, Nb ≤ 0.060%, 0.0005% ≤ B ≤ 0.0040%, 0.003% ≤ N ≤ 0.010%, S ≤ 0,005%, P ≤ 0,025%, %, the remainder being iron and unavoidable impurities resulting from the elaboration. With this composition range, the tensile strength of the corresponding area of the rear underfloor structure 2 after press-hardening is higher than 1800 MPa. For example, this sub-blank is made of Usibor^{®} 2000.

In a particular embodiment, the blank 26 used to manufacture the rear underfloor structure 2 comprises at least one sub-blank which is coated with an aluminum-based metallic coating. By aluminum based it is meant a coating that comprises at least 50% of aluminum in weight. For example, the metallic coating is an aluminum-based coating comprising 8 - 12% in weight of Si. For example, the metallic coating is applied by dipping the base material in a molten metallic bath. Advantageously, applying an aluminum-based metallic coating avoids the formation of surface scale during the heating step of the hot stamping process, which in turns allows to produce the parts by hot stamping without a subsequent sand blasting operation. Furthermore, the aluminum-based coating also provides corrosion protection to the part while in service on the vehicle.

In a particular embodiment, the blank 26 used to manufacture the rear underfloor structure 2 comprises at least one sub-blank which is coated with an aluminum-based metallic coating comprising from 2.0 to 24.0% by weight of zinc, from 1.1 to 12.0% by weight of silicon, optionally from 0 to 8.0% by weight of magnesium, and optionally additional elements chosen from Pb, Ni, Zr, or Hf, the content by weight of each additional element being inferior to 0.3% by weight, the balance being aluminum and optionally unavoidable impurities. Advantageously, this type of metallic coating affords very good corrosion protection on the part, as well as a good surface aspect after hot stamping.

In order to manufacture the above described tailor welded blanks having an aluminum-based coating on at least one of its sub-blank, it is possible to use laser welding. It is possible to use sub-blanks on which the edges to be welded have been prepared before-hand by ablating part of the metallic coating. Advantageously, this removes part of the aluminum present in the coating, which would pollute the weld seam and deteriorate its mechanical properties.

In a particular embodiment, the blank 26 used to manufacture the rear underfloor structure 2 comprises at least one sub-blank which comprises at least one side with an emissivity increasing top layer. Said emissivity increasing top layer is applied on the outermost surface of said sub-blank. Said emissivity increasing top layer allows the surface of said sub blank to have a higher emissivity compared to the same sub-blank which is not coated with said emissivity increasing top layer. Said emissivity increasing top layer can be applied either on the top or the bottom side of a sub-blank. Said emissivity increasing top layer can also be applied on both sides of said sub-blank.

If said sub-blank comprises a metallic coating, such as described previously, the emissivity increasing top layer is applied on top of said metallic coating. Indeed, for the emissivity increasing top layer to increase the emissivity of the surface, it needs to cover the outermost surface of the sub-blank.

Advantageously, said emissivity increasing top layer will allow to increase the heating rate of said sub-blank and therefore increase the productivity of the heating step of the hot stamping process.

In a particular embodiment, the blank 26 consists of n sub-blanks S1, S2, ... Sn which are sorted in the order of increasing thickness. The emissivity increasing top layer is applied on at least one side of the sub-blank having maximum thickness. In a particular embodiment the emissivity increasing top layer is applied on at least one side of the sub-blank having maximum thickness and the sub-blank having a thickness just below the maximum thickness. In a particular embodiment, the emissivity increasing top layer is applied to the x sub-blanks which have highest thickness, x being an integer superior or equal to 1. Advantageously, by applying the emissivity increasing top layer on the set of higher thickness sub-blanks, it is possible to reach a more homogeneous heating rate during the heating step of the hot stamping process between the higher thickness sub-blanks and the lower thickness sub-blanks. Indeed, the lower thickness sub-blanks will naturally heat faster than the higher thickness sub-blanks, because they are thinner and therefore need less energy to reach the same temperature. By targeting the higher thickness sub-blanks with an emissivity increasing top layer, it is possible to diminish the difference in heating rate between different thickness blanks and therefore to reach a more homogeneous heating rate between higher thickness sub-blanks and lower thickness sub-blanks. Furthermore, by targeting the higher thickness sub-blanks with an emissivity increasing top layer, it is also possible to increase the size of the process window of the heating step of the hot stamping process of the blank. When hot stamping large parts with high thickness differences, one of the concerns is that there will be high differences in the process window (which includes among other parameters the heating time and heating temperature) necessary to reach the desired microstructure and coating properties of the different sub blanks. The process window necessary to achieve the desired properties on the whole blank is the intersection between the process windows of each of the individual sub-blanks. By applying an emissivity increasing top layer on the higher thickness sub-blanks, it is possible to bring closer to one another the process windows of each of the individual sub-blanks and thereby to increase the size of the intersection between the process windows of all the sub-blanks, i.e. to increase the process window of the overall tailor welded blank.

In a particular embodiment, the emissivity increasing top layer has a thickness between 2 microns and 30 microns. In a particular embodiment, it is composed of a polymer that does not contain silicon, that contains more than 1% by weight of nitrogen, and that contains carbon pigments in a quantity between 3 and 30% by weight.

In a particular embodiment, the blank 26 used to manufacture the rear underfloor structure 2 further comprises at least one metallic patch 31 as depicted on figure 8, in order to locally increase the strength of the part. In a particular embodiment, the patch 31 is attached by spot welding. In a particular embodiment, the patch 31 is attached by laser welding. The patch 31 is for example applied in areas that need to be reinforced because they are designed to be attached to the undercarriage structure, or because of mechanical issues such as folding of the part detected during crash tests.

Generally speaking patches 31 have the advantage of providing very local reinforcements over larger size parts, thus further optimizing the strength and thickness distribution of the overall tailor welded blank and keeping the overall weight and cost of the part low.

Patches 31 are for example made of press-hardening steel. Patches 31 are for example coated with an aluminum based metallic coating.

In a particular embodiment, a patch 31 is coated with an emissivity increasing top layer, in order to yield the above described advantage of increasing the heating rate and therefore decreasing the difference in heating rate in the area of the patch 31 linked to the over thickness of said patch 31.

In a particular embodiment, the patch is applied on an area which includes a portion of weld seam 25. We will refer to it as a weld seam reinforcing patch 32, as depicted on figure 8. Such a patch 32 has exactly the same above described features and optional features. Such a patch 32 reinforces the weld seam 25. Weld seams 25 are areas in which there is a discontinuity between two sub-blanks, which leads to a local inertia variation and can result in a plastic hinge type of collapse when submitted to the high loads generated by a crash. Furthermore, because of the thermal input of the welding process, the weld seams are surrounded by heat affected zones, the weld seams themselves have a specific chemical composition resulting from the melting and mixing of the sub-blanks, their metallic coatings if any and the filler wire used for the welding if any. This complex thermal, chemical and metallurgical landscape means that there can be strength variations around the welds 25 compounded with the above described discontinuity issue, can further lead to rupture in the welds 25 area when they are submitted to excessive loading. Reinforcing a weld seam 25 by a weld seam reinforcing patch 32 can prevent such plastic hinge phenomenon. A weld seam reinforcing patch 32 is for example attached by welding it to the blank 26. In a particular embodiment, the attachment points between the weld seam reinforcing patch 32 and the blank 26 will not be in the weld seam 25 area, in order not to interfere with the mechanical properties of the weld seam 25.

When using press hardening steel coated with an aluminum based metallic coating on the blank 26, the hot stamping process induces the formation of an interdiffusion layer between the steel and the metallic coating on the hot formed part. The interdiffusion layer is the result of the cross diffusion at high temperature of Fe coming from the steel and going towards the metallic coating and Al coming from the coating and going towards the steel. The thickness of said interdiffusion layer has been shown to correlate with further in-use properties of the part, such as for example the ability of the part to be successfully assembled to the rest of the body by spot welding. In particular, it has been shown that hot formed parts having an interdiffusion layer thickness which is comprised between 3 microns and 15 microns have good in-use properties. More preferably, it has been shown that hot formed parts having an interdiffusion layer thickness which is comprised between 3 microns and 10 microns have excellent in-use properties.

In a particular embodiment, the thickness of the interdiffusion layer in the aluminum based metallic coated areas of the rear underfloor structure 2 is comprised between 3 microns and 15 microns. In a particular embodiment, the thickness of the interdiffusion layer in the aluminum based metallic coated areas of the rear underfloor structure 2 is comprised between 3 microns and 10 microns.

The fact that the rear underfloor structure 2 is manufactured as a single part integrating the side members 4 and the at least one cross member 5 means that the shape of the side member 4 needs to be adapted in the cross-member attachment zone 20. In particular, the shape of the inner wall 42 needs to be adapted, as was previously mentioned. The presence of a continuous inner wall 42, as is the case in the state of the art multi part solution, is not possible in the attachment zone 20.

In the case of a rear impact, which will exert a compressive load on the side members 4, the inventors have found that it can be advantageous to retain the inner radius 45 at least partly in the cross-member attachment zone 20. Indeed, without wanting to be bound by theory, it seems that the compressive force is transferred along the side members 4 mainly through the inner and outer radii 45, 46 of said side members. If there is a large discontinuity in the inner radius 45 over the cross-member attachment zone 20, the compressive force generated by the impact will not be correctly transferred to the rest of the vehicle structure and a stress concentration will occur in said cross-member attachment zone 20. This in turn can lead to a severe weakness of the part in this area and poor safety performance of the vehicle, for example it can lead to severe buckling in the attachment zone 20.

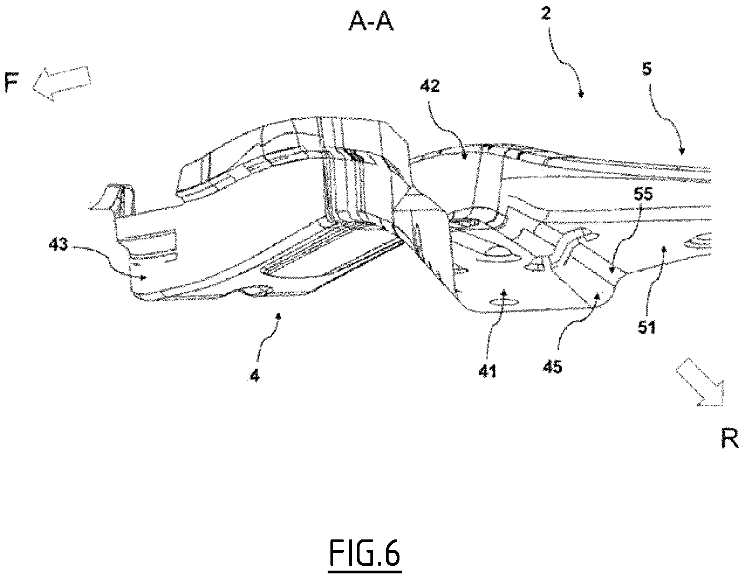

In a particular embodiment, the inner radius 45 extends over at least part of the cross-member attachment zone 20, as is made clearly visible in the perspective view of figure 6. For example, as illustrated in figure 6, this can be realized by introducing a step in between the horizontal wall 41 of the side member 4 and the horizontal wall 51 of the cross-member 5 in said cross-member attachment zone 20. In this step configuration, the inner radius 45 is followed by a cross-member radius 55 to create a step. Another possibility to provide a continuation in the inner radius 45 over at least part of the transition zone 20, not illustrated in the attached figures, would be to introduce a bead in the transition zone 20, in place of the above described step. Said bead can be formed for example by a shape similar to the above described step followed by a symmetrical step according to a plane of symmetry perpendicular to the orientation of the cross-member 5. This type of bead configuration allows to keep the same elevation for the horizontal walls 41 and 51 while maintaining the presence of the inner radius 45 over at least part of the transition zone 20.

In a particular embodiment, the rear underfloor structure 2 comprises geometrical alterations 22, as seen for example on figure 7. Said geometrical alterations 22 allow to concentrate stresses coming from an impact in specific regions of the part in order to protect other more fragile regions of the part. For example, said geometrical alterations can be placed in the vicinity of the weld seams 25 (represented by a dashed line on figure 7) linking the different sub blanks of the tailor welded blank used to manufacture the rear underfloor structure 2, in order to protect said weld seam 25. Bearing in mind the above described sensitivity of the weld seam 25 in case of high loads, the use of geometrical alterations 22 acting as triggers in the case of a crash can advantageously protect the weld seam 25 and ensure that the formation of a plastic hinge for example takes place away from the weld seam 25 thus preventing crack formation in the parts.

As was previously explained, the rear underfloor structure 2 according to the invention comprises at least one cross-member 5 but can also comprise several cross-members 5. It can for example comprise two, three or more cross-members 5. Figure 4 is a schematic top view of a rear underfloor structure 2 comprising two cross-members 5. Integrating several cross members 5 within the same rear underfloor structure 2 means that the cost and manufacturing simplicity benefits are increased. It also means that the blank 26 used to manufacture the rear underfloor structure 2 has better rigidity, thanks to the presence of several cross-members 5 linking the side members 4. This can be particularly advantageous for the handling of said blanks 26 during the manufacturing process and even more so in the case of hot stamping, which involves manipulating the blank heated at high temperature and having therefore lower mechanical strength during the step of transferring it from the austenitizing furnace to the hot stamping press.

The current invention also concerns a vehicle 1 comprising the above described rear underfloor structure 2.

The current disclosure may also include a process to produce the above described rear underfloor structure 2 and assemble it to the rest of the vehicle body. Such a process, which is not part of the claimed invention comprises the following steps:
- providing a tailor welded blank 26,
- stamping the tailor welded blank 26, for example by hot stamping,
- Attaching the rear underfloor structure 2 to the body of the vehicle 1.

## Claims

1. Rear underfloor structure (2) for a motor vehicle (1) comprising a first and a second side member (4) and at least one cross member (5) linking said first and second side members (4), wherein each side member (4) comprises:
- a horizontal wall (41) and an inner wall (42),
- at least one cross-member attachment zone (20), corresponding to the portion of the side member (4) on to which the corresponding cross-member (5) is attached, **characterized in that** the inner walls (42) do not have the same height in the cross-member attachment zone (20) and outside said cross-member attachment zone (20) and wherein said rear underfloor structure (2) is made by stamping a single tailor welded blank (26) comprising at least two sub-blanks.

2. Rear underfloor structure (2) according to claim 1, wherein said rear underfloor structure (2) is made by hot stamping.

3. Rear underfloor structure (2) according to claim 1 or 2, wherein said rear underfloor structure (2) comprises at least two cross members (5).

4. Rear underfloor structure (2) according to any one of claims 1 to 3, wherein the horizontal wall (41) and the inner wall (42) of each side member (4) are linked by an inner radius (45),
wherein said inner radius (45) extends along at least part of the cross-member attachment zone (20).

5. Rear underfloor structure (2) according to any one of claim 1 to 4, wherein the tailor welded blank (26) comprises at least one sub-blank which is coated with an aluminum based metallic coating.

6. Rear underfloor structure (2) according to any one of claim 1 to 5, wherein the tailor welded blank (26) comprises at least one sub-blank which is coated with an aluminum based metallic coating, comprising from 2.0 to 24.0% by weight of zinc, from 1.1 to 12.0% by weight of silicon, optionally from 0 to 8.0% by weight of magnesium, and optionally additional elements chosen from Pb, Ni, Zr, or Hf, the content by weight of each additional element being inferior to 0.3% by weight, the balance being aluminum and optionally unavoidable impurities.

7. Rear underfloor structure (2) according to any one of claim 1 to 6, wherein the tailor welded blank (26) comprises at least one sub-blank which comprises an emissivity increasing top layer on at least one side.

8. Rear underfloor structure (2) according to any one of claim 1 to 7, wherein the tailor welded blank (26) comprises at least one sub-blank which is made of a press-hardening steel having an ultimate tensile strength after hot stamping above 1800MPa.

9. Rear underfloor structure (2) according to any one of claim 1 to 8, wherein the tailor welded blank (26) comprises at least one sub-blank which is made of a press-hardening steel having a yield strength after hot forming comprised between 700 and 950MPa, an ultimate tensile strength after hot forming comprised between 950MPa and 1200MPa and a bending angle after hot forming above 75°.

10. Rear underfloor structure (2) according to any one of claim 1 to 9, wherein the tailor welded blank (26) comprises at least one metallic patch (31).

11. Rear underfloor structure (2) according to claim 10, wherein at least one metallic patch (31) comprises an emissivity increasing top layer.

12. Rear underfloor structure (2) according to any one of claim 1 to 11, wherein the tailor welded blank (26) comprises at least one weld seam reinforcing patch (32), wherein said weld seam reinforcing patch (32) is applied on an area which comprises a weld seam (25).

13. Rear underfloor structure (2) according to claim 12, wherein at least one weld seam reinforcing patch (32) comprises an emissivity increasing top layer.

14. Rear underfloor structure (2) according to any one of claims 5 to 13, wherein the thickness of the interdiffusion layer in the Aluminum based metallic coated areas of the rear underfloor structure (2) is comprised between 3 microns and 15 microns.

15. Rear underfloor structure (2) according to the preceding claim, wherein the thickness of the interdiffusion layer in the Aluminum based metallic coated areas of the rear underfloor structure (2) is comprised between 3 microns and 10 microns.

16. Motor vehicle (1) comprising a rear underfloor structure (2) according to any one of the preceding claims.

## Patentansprüche

1. Hintere Unterbodenstruktur (2) für ein Kraftfahrzeug (1), umfassend einen ersten und einen zweiten Seitenträger (4) und mindestens einen Querträger (5), der den besagten ersten und zweiten Seitenträger (4) verbindet, wobei jeder Seitenträger (4) umfasst:
- eine horizontale Wand (41) und eine Innenwand (42),
- mindestens einen Querträger-Anbindungsbereich (20), entsprechend dem Abschnitt des Seitenträgers (4), an dem der entsprechende Querträger (5) angebracht ist, **dadurch gekennzeichnet, dass** die Innenwände (42) nicht dieselbe Höhe in dem Querträger-Anbindungsbereich (20) und außerhalb des besagten Querträger-Anbindungsbereichs (20) aufweisen und wobei die besagte hintere Unterbodenstruktur (2) durch Stanzen eines einzelnen tailorgeschweißten Zuschnitts (26) hergestellt ist, der mindestens zwei Teilszuschnitte umfasst.

2. Hintere Unterbodenstruktur (2) gemäß Anspruch 1, wobei die besagte hintere Unterbodenstruktur (2) durch Warmumformen hergestellt ist.

3. Hintere Unterbodenstruktur (2) gemäß Anspruch 1 oder 2, wobei die besagte hintere Unterbodenstruktur (2) mindestens zwei Querträger (5) umfasst.

4. Hintere Unterbodenstruktur (2) gemäß irgendeinem der Ansprüche 1 bis 3, wobei
die horizontale Wand (41) und die Innenwand (42) jedes Seitenträgers (4) durch einen Innenradius (45) verbunden sind,
wobei sich der besagte Innenradius (45) entlang mindestens eines Teils des Querträger-Anbindungsbereichs (20) erstreckt.

5. Hintere Unterbodenstruktur (2) gemäß irgendeinem von Anspruch 1 bis 4, wobei der tailor-geschweißte Zuschnitt (26) mindestens einen Teilszuschnitt umfasst, der mit einer aluminiumbasierten metallischen Beschichtung beschichtet ist.

6. Hintere Unterbodenstruktur (2) gemäß irgendeinem von Anspruch 1 bis 5, wobei der tailor-geschweißte Zuschnitt (26) mindestens einen Teilszuschnitt umfasst, der mit einer aluminiumbasierten metallischen Beschichtung beschichtet ist, umfassend von 2,0 bis 24,0 Gew.-% Zink, von 1,1 bis 12,0 Gew.-% Silizium, optional von 0 bis 8,0 Gew.-% Magnesium, und optional zusätzliche Elemente, die aus Pb, Ni, Zr oder Hf ausgewählt sind, wobei der Gewichtsgehalt jedes zusätzlichen Elements unter 0,3 Gew.-% liegt, wobei der Rest Aluminium und optional unvermeidbare Verunreinigungen ist.

7. Hintere Unterbodenstruktur (2) gemäß irgendeinem von Anspruch 1 bis 6, wobei der tailor-geschweißte Zuschnitt (26) mindestens einen Teilszuschnitt umfasst, der auf mindestens einer Seite eine emissivitätssteigernde Deckschicht umfasst.

8. Hintere Unterbodenstruktur (2) gemäß irgendeinem von Anspruch 1 bis 7, wobei der tailor-geschweißte Zuschnitt (26) mindestens einen Teilszuschnitt umfasst, der aus einem presshärtenden Stahl hergestellt ist, der eine Zugfestigkeit nach dem Warmumformen von über 1800MPa aufweist.

9. Hintere Unterbodenstruktur (2) gemäß irgendeinem von Anspruch 1 bis 8, wobei der tailor-geschweißte Zuschnitt (26) mindestens einen Teilszuschnitt umfasst, der aus einem presshärtenden Stahl hergestellt ist, der eine Streckgrenze nach dem Warmformen aufweist, die zwischen 700 und 950MPa liegt, eine Zugfestigkeit nach dem Warmformen, die zwischen 950MPa und 1200MPa liegt, und einen Biegewinkel nach dem Warmformen von über 75°.

10. Hintere Unterbodenstruktur (2) gemäß irgendeinem von Anspruch 1 bis 9, wobei der tailor-geschweißte Zuschnitt (26) mindestens einen metallischen Patch (31) umfasst.

11. Hintere Unterbodenstruktur (2) gemäß Anspruch 10, wobei mindestens ein metallischer Patch (31) eine emissivitätssteigernde Deckschicht umfasst.

12. Hintere Unterbodenstruktur (2) gemäß irgendeinem von Anspruch 1 bis 11, wobei der tailor-geschweißte Zuschnitt (26) mindestens einen Schweißnahtverstärkungs-Patch (32) umfasst, wobei der besagte Schweißnahtverstärkungs-Patch (32) auf einen Bereich aufgebracht ist, der eine Schweißnaht (25) umfasst.

13. Hintere Unterbodenstruktur (2) gemäß Anspruch 12, wobei mindestens ein Schweißnahtverstärkungs-Patch (32) eine emissivitätssteigernde Deckschicht umfasst.

14. Hintere Unterbodenstruktur (2) gemäß irgendeinem der Ansprüche 5 bis 13, wobei die Dicke der Interdiffusionsschicht in den Bereichen mit aluminiumbasierter metallischer Beschichtung der hinteren Unterbodenstruktur (2) zwischen 3 Mikrometern und 15 Mikrometern liegt.

15. Hintere Unterbodenstruktur (2) gemäß dem vorhergehenden Anspruch, wobei die Dicke der Interdiffusionsschicht in den Bereichen mit aluminiumbasierter metallischer Beschichtung der hinteren Unterbodenstruktur (2) zwischen 3 Mikrometern und 10 Mikrometern liegt.

16. Kraftfahrzeug (1), umfassend eine hintere Unterbodenstruktur (2) gemäß irgendeinem der vorhergehenden Ansprüche.

## Revendications

1. Structure sous-plancher arrière (2) pour un véhicule à moteur (1) comprenant un premier et un second élément latéral (4) et au moins une traverse (5) reliant lesdits premier et second éléments latéraux (4), dans laquelle chaque élément latéral (4) comprend :
- une paroi horizontale (41) et une paroi intérieure (42),
- au moins une zone de fixation de traverse (20), correspondant à la portion de l'élément latéral (4) sur laquelle la traverse (5) correspondante est fixée, **caractérisée en ce que** les parois intérieures (42) n'ont pas la même hauteur dans la zone de fixation de traverse (20) et à l'extérieur de ladite zone de fixation de traverse (20) et dans laquelle ladite structure sous-plancher arrière (2) est fabriquée par emboutissage d'un seul flan soudé sur mesure (26) comprenant au moins deux sous-flans.

2. Structure sous-plancher arrière (2) selon la revendication 1, dans laquelle ladite structure sous-plancher arrière (2) est fabriquée par emboutissage à chaud.

3. Structure sous-plancher arrière (2) selon la revendication 1 ou 2, dans laquelle ladite structure sous-plancher arrière (2) comprend au moins deux traverses (5).

4. Structure sous-plancher arrière (2) selon l'une quelconque des revendications 1 à 3, dans laquelle
la paroi horizontale (41) et la paroi intérieure (42) de chaque élément latéral (4) sont reliées par un rayon intérieur (45),
dans laquelle ledit rayon intérieur (45) s'étend le long d'au moins une partie de la zone de fixation de traverse (20).

5. Structure sous-plancher arrière (2) selon l'une quelconque des revendications 1 à 4, dans laquelle le flan soudé sur mesure (26) comprend au moins un sous-flan qui est revêtu d'un revêtement métallique à base d'aluminium.

6. Structure sous-plancher arrière (2) selon l'une quelconque des revendications 1 à 5, dans laquelle le flan soudé sur mesure (26) comprend au moins un sous-flan qui est revêtu d'un revêtement métallique à base d'aluminium, comprenant 2,0 à 24,0 % massique de zinc, 1,1 à 12,0 % massique de silicium, optionnellement 0 à 8,0 % massique de magnésium, et optionnellement des éléments additionnels choisis parmi Pb, Ni, Zr, ou Hf, la teneur massique de chaque élément additionnel étant inférieure à 0,3 % massique, le reste étant de l'aluminium et facultativement des impuretés inévitables.

7. Structure sous-plancher arrière (2) selon l'une quelconque des revendications 1 à 6, dans laquelle le flan soudé sur mesure (26) comprend au moins un sous-flan qui comprend une couche supérieure augmentant l'émissivité sur au moins un côté.

8. Structure sous-plancher arrière (2) selon l'une quelconque des revendications 1 à 7, dans laquelle le flan soudé sur mesure (26) comprend au moins un sous-flan qui est constitué d'un acier à durcissement sous presse ayant une résistance à la traction ultime après emboutissage à chaud supérieure à 1800MPa.

9. Structure sous-plancher arrière (2) selon l'une quelconque des revendications 1 à 8, dans laquelle le flan soudé sur mesure (26) comprend au moins un sous-flan qui est constitué d'un acier à durcissement sous presse ayant une limite d'élasticité après formage à chaud comprise entre 700 et 950MPa, une résistance à la traction ultime après formage à chaud comprise entre 950MPa et 1200MPa et un angle de pliage après formage à chaud supérieur à 75°.

10. Structure sous-plancher arrière (2) selon l'une quelconque des revendications 1 à 9, dans laquelle l'ébauche soudée sur mesure (26) comprend au moins un patch métallique (31).

11. Structure sous-plancher arrière (2) selon la revendication 10, dans laquelle au moins un patch métallique (31) comprend une couche supérieure augmentant l'émissivité.

12. Structure sous-plancher arrière (2) selon l'une quelconque des revendications 1 à 11, dans laquelle le flan soudé sur mesure (26) comprend au moins un patch de renforcement de cordon de soudure (32), dans laquelle ledit patch de renforcement de cordon de soudure (32) est appliqué sur une zone qui comprend un cordon de soudure (25).

13. Structure sous-plancher arrière (2) selon la revendication 12, dans laquelle au moins un patch de renforcement de cordon de soudure (32) comprend une couche supérieure augmentant l'émissivité.

14. Structure sous-plancher arrière (2) selon l'une quelconque des revendications 5 à 13, dans laquelle l'épaisseur de la couche d'interdiffusion dans les zones à revêtement métallique à base d'aluminium de la structure sous-plancher arrière (2) est comprise entre 3 microns et 15 microns.

15. Structure sous-plancher arrière (2) selon la revendication précédente, dans laquelle l'épaisseur de la couche d'interdiffusion dans les zones à revêtement métallique à base d'aluminium de la structure sous-plancher arrière (2) est comprise entre 3 microns et 10 microns.

16. Véhicule à moteur (1) comprenant une structure sous-plancher arrière (2) selon l'une quelconque des revendications précédentes.
